(19) Europäisches Patentamt / European Patent Office / Office européen des brevets

(11) **EP 4 374 076 B1**

(12) **EUROPEAN PATENT SPECIFICATION**

(45) Date of publication and mention
of the grant of the patent:
**30.07.2025 Bulletin 2025/31**

(21) Application number: **22741863.9**

(22) Date of filing: **15.07.2022**

(51) International Patent Classification (IPC):
*F04C 28/28* (2006.01)     *B67D 7/04* (2010.01)
*G01F 3/06* (2006.01)     *G01F 3/08* (2006.01)

(52) Cooperative Patent Classification (CPC):
**F04C 28/28; B67D 7/0486; F04C 28/08;**
F04C 18/3445; F04C 2210/1044; F04C 2240/40;
F04C 2240/803; F04C 2240/81; G01F 3/08

(86) International application number:
**PCT/IB2022/056523**

(87) International publication number:
**WO 2023/002318 (26.01.2023 Gazette 2023/04)**

(54) **VAPOUR RECOVERY UNIT FOR FUEL FILLING STATIONS**

DAMPFRÜCKGEWINNUNGSEINHEIT FÜR KRAFTSTOFFEINFÜLLANLAGEN

UNITÉ DE RÉCUPÉRATION DE VAPEUR POUR STATIONS D'ESSENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.07.2021 IT 202100018968**

(43) Date of publication of application:
**29.05.2024 Bulletin 2024/22**

(73) Proprietor: **Assytech S.R.L.**
**23018 Talamona (SO) (IT)**

(72) Inventor: **MOTTI, Edoardo**
**23012 Castione Andevenno (SO) (IT)**

(74) Representative: **Boario, Enrico et al**
**Barzanò & Zanardo S.p.A.**
**Corso Vittorio Emanuele II, 61**
**10128 Torino (IT)**

(56) References cited:
WO-A1-97/32130     WO-A2-2015/187976
US-A1- 2019 257 262

**Description**

The present invention relates to an improved vapour recovery unit for fuel filling stations, which permits a simpler installation and ensures a safer and more reliable operation.

Vapour recovery units or pumps are known which are installed in fuel filling stations adapted for sucking up the vapours generated by the fuel contained in the vehicles' tanks as the latter are being filled with additional fuel. In particular, said vapour recovery unit or pump is adapted to suck up a quantity of vapour from the tank of a vehicle which equals the volume of the fuel delivered during the filling operation.

It is in fact known, and regulated by several standards, that when filling vehicles' tanks it is necessary to suck up the potentially harmful and polluting vapours generated by the fuel, which would otherwise be dispersed into the atmosphere. Said pump must also be appropriately driven for sucking up the vapours, during the fuel filling operation, as a function of the rate and volume of fuel entering the tank, and the sucked up and recovered vapours must then be suitably stored.

Variable-speed vapour recovery units or pumps are known which employ a brushed direct-current motor, wherein brushes are used for commutating the poles of the electromagnet in order to keep the motor spinning.

It is also known, from document US5027654A, a volumetric meter for liquids and/or gases, wherein in the radial cavities of the rotor rolling rollers are housed which, by undergoing mutual repulsion by the action of magnets embedded in them, are urged radially into a sealed state against the inner surface of the cylindrical chamber, which is provided in positions straddling said opposite maximum and minimum clearance zones with two portions having constant curvatures with their centre on the rotor axis and extending through an angle equal to the angular pitch between two successive rollers, i.e. to 360° divided by the number of rollers used.

Variable-speed vapour recovery units or pumps are known which employ a brushless direct-current motor, e.g. BLDC motors. Due to the absence of brushes, there are no mechanical components controlling the polarity commutations. An electronic control circuit is therefore necessary to continually commutate the winding phase in order to keep the motor spinning. To do so, the windings are excited in a particular sequence.

Such a solution requires the use of sensors, particularly Hall-effect sensors and/or encoders positioned in the inner structure of the motor, in proximity to the rotor, to determine the angular position of the rotor, whereon the permanent magnets are placed, relative to the stator, so as to be able to appropriately supply power to the stator windings and properly control the motor.

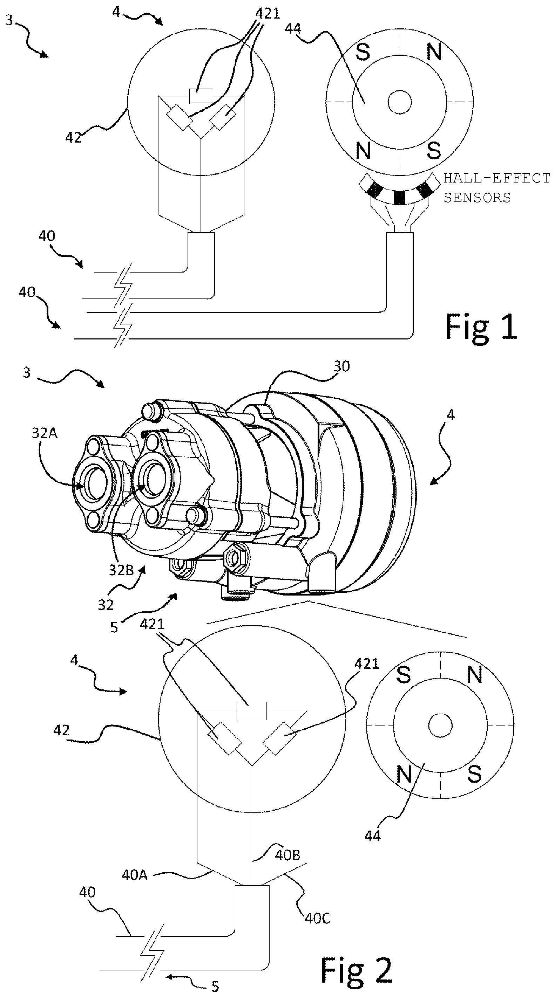

Figure 1 schematically shows the electric connection of brushless motor 4 of a vapour recovery unit 3 according to the state of the art, wherein a first cable 40 is adapted to supply power to windings 421 of stator 42, and a second cable 40, which reaches rotor 44 of motor 4, is adapted to permit the flow of electronic signals generated by the Hall-effect sensors arranged near stator 42, in addition to supplying current to the latter.

Such a solution requires that, in addition to the first cable for supplying power to the motor, at least one second cable be laid inside the motor in order to supply power to the sensors and receive the signals detected by the encoder or by the Hall-effect sensors.

The use of two or more cables for transporting an electric and/or electronic current and the signals permitting the correct operation of the motor of the vapour recovery unit increases the risk of accidents, and hence the costs incurred for making the device safe and compliant with the safety regulations, e.g. the ATEX regulation.

Moreover, the regulations require numerous checks concerning the proper operation of the vapour recovery pump and the proper storage of such vapours.

Furthermore, no vapour recovery units are known which are safe and reliable stand-alone devices complying with the safety regulations currently in force.

It is known by the PCT patent application WO9732130A1 a vapour recovery pump for pumping flammable vapours. The pump includes a pump unit that defines a pump chamber into which the vapour is first drawn and then exhausted from. A motor contained in a motor housing provides the motive force for energizing the pump unit. A single-piece inboard head seals the pump chamber and the motor housing and spaces the pump chamber away from the motor. Removable flame arrestor assemblies are attached to the inlet and outlet ports into which the vapour is, respectively, drawn into and exhausted from. A gland assembly integral with the motor housing provides a seal around the conductors that extend to the motor.

It is also know by the US patent application US2019257262A1 a fuel mixing occurrence detection device. The device includes a fuel-type identification unit that identifies a type of fuel injected into a vehicle by comparing a fuel pump drive RPM for achieving target fuel pressure with a predetermined reference value upon starting of the vehicle. A communication unit transmits a fuel mixing occurrence to an in-vehicle controller in response to determining that the fuel mixing has occurred.

At last, it is known by the PCT patent application WO2015187976A2 a systems and methods for optimizing the operation of a fuel dispensing system comprising a pump assembly in a fuel dispenser. The fuel dispenser comprises a control system in electronic communication with a motor of a pump and with a displacement sensor operatively connected to a fuel flow meter. The pump is located within the fuel dispenser housing, and the motor is operative to turn a shaft coupled with a pumping element to pump fuel from a storage tank through the fuel dispenser. A method of controlling the fuel dispenser comprises receiving at the control system information representative of the flow rate of fuel through the fuel flow meter, receiving at the control system information representative of at least one operational characteristic of the motor, and comparing the information representative of the flow rate of fuel to the information representative of the at least one operational characteristic of the motor.

The present invention aims at solving these and other technical problems suffered by the vapour recovery units and fuel filling stations known in the art by providing an innovative, low-cost vapour recovery unit that ensures a high level of reliability and safety.

One aspect of the present invention relates to a vapour recovery unit for fuel filling stations according to claim 1.

A further aspect of the present invention relates to a fuel filling station according to claim 9.

The features and advantages of the unit and station will become apparent in light of the following description of some possible embodiments thereof and of the annexed drawings, wherein:

- Figure 1 schematically shows the electric connection of the brushless motor of a vapour recovery unit according to the prior art;
- Figure 2 shows a first possible embodiment of the vapour recovery unit according to the present invention, including an axonometric view of the vapour recovery unit and a schematic view of the connection of the single cable;
- Figure 3 schematically shows a second possible embodiment of the vapour recovery unit according to the present invention, comprising a flow sensor;
- Figure 4 schematically shows a third possible embodiment of the vapour recovery unit according to the present invention, comprising a pressure transducer;
- Figure 5 shows a fuel filling station comprising a vapour recovery unit in a preferred, though illustrative and non-limiting, embodiment.

With reference to the above-mentioned figures, reference numeral 3 designates as a whole a vapour recovery unit according to the present invention, whereas reference numeral 1 designates as a whole a fuel filling station.

Vapour recovery unit 3 according to the present invention is particularly suited for application in fuel filling stations 1.

Vapour recovery unit 3 according to the present invention comprises at least one pumping device 32. Said pumping device 32 is adapted to generate a vapour flow between an inlet 32A and an outlet 32B at a variable flow rate as required.

For the purposes of the present description, the expression "variable flow rate" refers to variations over time of the flow, generated by said pumping device 32, between said inlet 32A and said outlet 32B.

Vapour recovery unit 3 according to the present invention comprises a brushless motor 4. Said brushless motor 4 is of the variable-speed type. Said brushless motor 4 is adapted to rotatably drive said pumping device 32. Said brushless motor 4 comprises a stator 42 and a rotor 44.

Vapour recovery unit 3 according to the present invention comprises an electronic control circuit 5. Said electronic control circuit 5 is adapted to control said brushless motor 4 for rotating said pumping device 32 at the appropriate speed to obtain the desired vapour flow rate. In particular, a variation over time of the revolution speed of brushless motor 4 will result in a variation over time of the flow of vapour through said pumping device 32.

Vapour recovery unit 3 according to the present invention is designed to comprise a single electric cable 40 connected to said vapour recovery unit 3. Said single cable 40 has three wires or conductors (40A, 40B, 40C) at most and is adapted to supply power to brushless motor 4. In particular, said single cable 40 is adapted to conduct current for windings 421 comprised in stator 42 of brushless motor 4.

Said electronic control circuit 5 is connected to said single cable 40.

Vapour recovery unit 3 according to the present invention is so designed that said electronic control circuit 5 comprises sensors 52 adapted to detect the electromotive force induced on said single cable 40, in particular on one or more wires or conductors (40A, 40B, 40C) of single cable 40.

Said electronic control circuit 5 further comprises at least one computing unit 54 adapted to determine and monitor the position of rotor 44 relative to stator 42 as a function of the data or signals generated by said sensors 52.

Vapour recovery unit 3 according to the present invention is designed with no sensors housed in pumping device 32 and/or in brushless motor 4 to determine, in particular mechanically, the position of rotor 44 relative to stator 42 of brushless motor 4.

Therefore, vapour recovery unit 3 according to the present invention, and in particular brushless motor 4, may be considered as a sensorless unit, because no sensors or position transducers are associated with the motor. In fact, vapour recovery unit 3 according to the present invention, and in particular said electronic control circuit 5, is designed to determine the position of rotor 44 relative to stator 42 of brushless motor 4 by replacing mechanical measurements, in particular position measurements taken by encoders or Hall-effect sensors typically arranged on the motor, with measurements of the electric quantities of the motor's power supply signal. The present solution permits the following: reducing the production costs of brushless motor 4; improving the reliability of vapour recovery unit 3; and increasing the robustness of brushless motor 4 from both a mechanical and an electrical point of view.

The use of a single cable 40 makes vapour recovery unit 3 easier to install in a vapour recovery circuit 2 and, more in general, in a fuel filling station 1, resulting in reduced installation times and costs, e.g. for complying with safety regulations.

Through said electronic control circuit 5 it is possible to detect the electromotive force induced on cable 40, and in particular on the wires or conductors (40A-40C) adapted to supply power to brushless motor 4, thus allowing for actively monitoring the position of rotor 44, the number of revolutions made by rotor 44 per time unit, the direction of rotation of rotor 44 and its power absorption.

The present solution makes it possible to use just a single cable 40 having three wires or conductors (40A-40C) at most, which was already used in the prior art to drive brushless motor 4 in combination with other cables as previously specified herein, thereby reducing wiring times and costs.

The present solution also makes it possible to reduce the number of components in brushless motor 4 and/or in pumping device 32, thereby reducing the costs incurred for manufacturing vapour recovery unit 3 and also making the latter easier to service and more effective.

Describing now more in detail some possible embodiments of vapour recovery unit 3 according to the present invention, said pumping device 32 is a volumetric pump, so that it is possible to determine the amount of vapour flowing through said pumping device 32. Even more preferably, said pumping device 32 is a rotary-roller volumetric pump.

One possible, but merely illustrative and non-limiting, embodiment of said roller-type volumetric pump is described in document US5027654A, the technical contents of which should be considered as comprised in the present patent application. For this reason, the mechanical details of said pumping device 32 will not be described any further herein.

In a preferred, but merely illustrative and non-limiting, embodiment of vapour recovery unit 3 according to the present invention, said pumping device 32 is adapted to generate a variable flow rate of 5 l/min to 50 l/min.

In a preferred, but merely illustrative and non-limiting, embodiment of vapour recovery unit 3 according to the present invention, said brushless motor 4 is adapted to rotate at a variable speed of 150 rpm to 1,500 rpm.

Preferably, said brushless motor 4 is powered by direct current DC with a nominal voltage of 36 VDC and a nominal current of 2 A. This power signal is conducted by said single cable 40.

More particularly, said revolution speed of brushless motor 4 permits the achievement of a flow rate, generated by said pumping device 32, in the range of 5 l/min to 50 l/min. In fact, said pumping device 32 is adapted to rotate at a speed of 150 rpm to 1,500 rpm. Preferably, said pumping device 32 is designed to generate a flow rate in the range of 5 l/min to 50 l/min, with a delivery pressure of approximately 50 mbar.

As to the construction details, a preferred embodiment of vapour recovery unit 3 according to the present invention comprises an external enclosure 30, preferably a metallic one. Said external enclosure 30 is adapted to internally house both said pumping device 32 and said brushless motor 4.

In a preferred embodiment of vapour recovery unit 3 according to the present invention, said electronic control circuit 5 is at least partly housed inside the external enclosure 30.

The present solution provides a more compact vapour recovery unit 3 that is easier to manufacture and install.

Even more preferably, said electronic control circuit 5 is completely installed within external enclosure 30. The present embodiment also makes the installation of vapour recovery unit 3 simpler, since it is not necessary to place said electronic control circuit 5 in a position in proximity to or remote from said external enclosure 30 of vapour recovery unit 3.

In an alternative embodiment, at least that portion of electronic control circuit 5 which comprises said sensors 52, adapted to detect the electromotive force induced on said single cable 40, is placed inside external enclosure 30. The present embodiment makes it possible to position sensors 52, adapted to determine the position of rotor 44 relative to stator 42, within the housing defined by external enclosure 30, thus simplifying the measurement procedure on said single cable 40.

In an alternative embodiment of vapour recovery unit 3, said electronic control circuit 5 is external to external enclosure 30. Preferably, said external electronic control circuit 5 is positioned in proximity to said external enclosure 30. Alternatively, said electronic control circuit 5 is positioned in a remote area at a distance from said external enclosure 30.

More in general, said electronic control circuit 5 is structurally separate from, and independent of, both said brushless motor 4 and said pumping device 32.

More generally, said electronic control circuit 5 is adapted to control one or more brushless electric motors 4, e.g. associated with two different pumping devices 32, e.g. associated with two different portions of a vapour recovery circuit 2 for two distinct fuel dispensing nozzles 15 comprised in a fuel distribution circuit 12 comprised in a fuel filling station 1.

Preferably, said electronic control circuit 5 comprises one or more safety systems (not shown) adapted to stop said brushless motor 4 in case of one or more faults, which may be signalled by means of one or more user interfaces, e.g. a luminous signal, e.g. a pulsed or flashing signal, emitted by a suitable illumination device, e.g. an LED, preferably a dual-tone one.

As aforementioned, said electronic control circuit 5 is adapted to control said brushless motor 4, e.g. by adjusting the power supplied to said brushless motor, in order to adjust the revolution speed of brushless motor 4 and hence the revolution speed of pumping device 32. In particular, said electronic control circuit 5 is adapted to adjust the revolution speed of brushless motor 4 proportionally to a signal, in particular a frequency, received from a position transducer, e.g. an encoder, placed in fuel distribution circuit 12, for measuring the fuel quantity being dispensed.

Moreover, said electronic control circuit 5 is adapted to correct the revolution speed of brushless motor 4 in order to correct the revolution speed of pumping device 32 and be able to recover from the vehicle's tank the vapour coming out during the fuel filling operation in an amount proportional to the volume of fuel entering said tank. For example, the revolution speed of pumping device 32 is related to the input frequency by the following formula:

$$f\ (f_{in}\ x\ k)=Vp$$

where "$f_{in}$" is the input frequency of the position transducer, in particular an encoder, of the distribution circuit; "k" is a corrective factor that may be varied as a function of a number of parameters, "f" is a function that can be defined by the user, e.g. according to a table saved on a rewritable memory medium, e.g. an EEprom, e.g. f = 2/3 x.

More in general, said sensors 52 are, for example, sensors adapted to detect said induced electromotive force, e.g. inductive sensors and/or voltage meters, e.g. differential ones, and/or current meters, e.g. reverse current meters.

Preferably, at least one sensor 52 is associated with each wire or conductor (40A-4C) of single cable 40. Even more preferably, a respective single sensor 52 is associated with each wire or conductor (40A-4C) of single cable 40.

Said computing unit 54, e.g. a microcontroller, is adapted to receive the signals from said sensors 52 and to process them for the purpose of determining the power signal to be sent to brushless motor 4 in order to obtain the desired revolution speed of pumping device 32, as previously specified herein. Said computing unit 54 is also connected to a memory unit, e.g. an EEprom (not shown), in order to retrieve all the parameters necessary for determining the most appropriate revolution speed of brushless motor 4.

In a preferred, but merely illustrative and non-limiting, embodiment of vapour recovery unit 3 according to the present invention, said electronic control circuit 5 is electrically connected to a flow sensor 6. Said flow sensor 6 is adapted to measure the vapour flow entering pumping device 32. In particular, said flow sensor 6 is adapted to measure the vapour flow arriving at inlet 32A of pumping device 32.

Preferably, said flow sensor 6 is a sensor capable of measuring the flow rate and the temperature of the recovered hydrocarbon vapour.

Thanks to the electronic signals received from said flow sensor 6, said electronic control circuit 5 is adapted to automatically correct, within predefined values, the efficiency of vapour recovery unit 3, thus ensuring a reliable operation of vapour recovery unit 3 over time. For example, based on the data received from flow sensor 6, said electronic control circuit 5 will adjust said corrective parameter "k", thereby changing the revolution speed of pumping device 32.

More in general, the data, e.g. electronic signals, generated by said flow sensor 6 are used by said electronic control circuit 5 to control said brushless motor 4 during the rotation of said pumping device 32.

In fact, this solution makes it possible to correct the percentage of sucked up vapour to keep the ratio between recovered vapour volume and fuel litres (volume) supplied into the vehicle's tank substantially constant, preferably within a predefined range of +/- 5% throughout the life cycle of vapour recovery unit 3.

Through said electronic control circuit 5, based on the data obtained from flow sensor 6, it is possible to provide an electronic signal capable of activating a user interface, e.g. an LED, in order to warn, as known in the art, the personnel of fuel filling station 1 about a fault and/or a malfunction of vapour recovery unit 3 or of the vapour recovery circuit 2.

In a preferred, but merely illustrative and non-limiting, embodiment of vapour recovery unit 3 according to the present invention, said electronic control circuit 5 is electronically connected to a pressure transducer 7. Said pressure transducer 7 is adapted to determine the pressure within a vapour storage tank (not shown).

Said pressure transducer 7 permits monitoring the pressure within storage tanks, since it can be installed on the vapour return line of vapour recovery circuit 2, thus complying with the requirements of the EN 16321-1 regulation.

The data, e.g. electronic signals, generated by said pressure transducer 7 are used by said electronic control circuit 5 for at least controlling said brushless motor 4 during the rotation of said pumping device 32. In fact, through said pressure transducer 7 it is possible to determine a possible inefficiency in vapour recovery circuit 2 and improve the performance of vapour recovery unit 3 by adjusting the revolution speed of pumping device 32.

In more detail, the EN 16321-1 regulation requires that an indication of a fault or malfunction of vapour recovery unit 3 must be triggered when it emerges that the volumetric ratio or rate between the recovered vapour mixture and the dispensed fuel, measured throughout the fuel filling operation for ten successive fuel filling operations, is lower than 85% or higher than 115%.

Through said pressure transducer 7 it is possible to monitor the pressure within storage tanks, e.g. underground

**EP 4 374 076 B1**

ones, in order to ensure a proper operation of the whole vapour recovery circuit 2.

In a further preferred, but merely illustrative and non-limiting, embodiment, said electronic control circuit 5 is electrically connected to both said flow sensor 6 and said pressure transducer 7.

The present embodiment makes it possible to obtain two parameters that were not taken into account in the prior art, which are useful for controlling vapour recovery unit 3 and improving the efficiency thereof.

In a preferred, but merely illustrative and non-limiting, embodiment of vapour recovery unit 3 according to the present invention, said electronic control circuit 5 comprises a connection port 56. Through said connection port 56, said electronic control circuit 5 can be connected to an external control unit, e.g. control unit 10 of fuel filling station 1 and/or a PC.

The present embodiment makes it possible to interface vapour recovery unit 3 with fuel filling station 1, for the purpose of improving the operation of fuel filling station 1 itself by increasing its efficiency and the speed of resolution of any issue that may arise.

Said connection port 56 of electronic control circuit 5 allows said vapour recovery unit 3 to be connected, through a communication protocol, e.g. RS485, to a PC for programming and monitoring said vapour recovery unit 3.

More in general, by means of said connection port 56 a data connection can be established through which it is possible to, via messages sent serially according to the RS485 standard, gain access to the registers of computing unit 54, e.g. a microcontroller, so that said vapour recovery unit 3 can be programmed or monitored.

Describing now more in detail the construction of vapour recovery unit 3 according to the present invention, Figure 2 shows a first possible embodiment of vapour recovery unit 3 according to the present invention.

This figure shows vapour recovery unit 3 in an axonometric view, wherein one can see an external enclosure 30 inside of which brushless motor 4, electronic control circuit 5 and pumping device 32 are arranged. Said pumping device 32 defines an inlet 32A and an outlet 32B, through which the recovered vapours flow.

In this figure it is possible to see that brushless motor 4 is housed in the rear part of vapour recovery unit 3, while the front part of vapour recovery unit 3 houses pumping device 32, which is adapted to be connected to the pipes of the vapour recovery circuit.

The same figure shows a schematic view of rotor 44 and of stator 42, the latter comprising windings 421, in particular three windings, to which the three wires or conductors (40A, 40B, 40C) of single cable 40 are connected. The figure also shows the connection between cable 40 and windings 421 of stator 42.

To said single cable 40 said electronic control circuit 5 is connected, which can detect, by means of sensors, the electromotive force induced on said single cable 40, in particular on each wire or conductor (40A, 40B, 40C), for determining the position of rotor 44, in particular of the magnets comprised therein, relative to stator 42, in particular relative to windings 421. Unlike the vapour recovery units according to the prior art, said rotor 44 comprises no sensors.

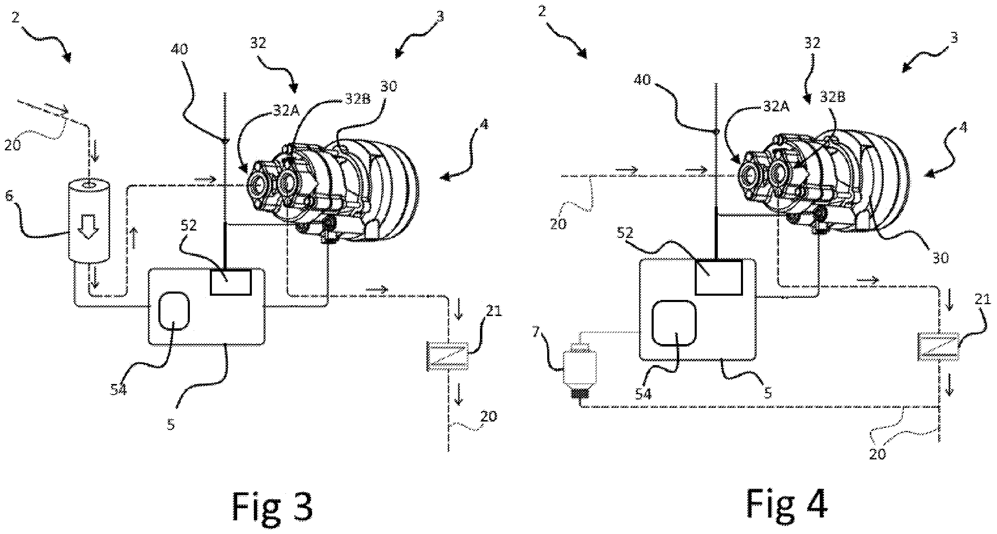

Figure 3 shows a second possible embodiment of vapour recovery unit 3 according to the present invention. This embodiment is an evolution of the first embodiment of vapour recovery unit 3, shown by way of example in Figure 2. In this case as well, only said single cable 40 for supplying power to said vapour recovery unit 3 comes from the outside. In the embodiment of Figure 3, vapour recovery unit 3 comprises a flow sensor 6.

Figure 3 also shows the connection between vapour recovery unit 3 and vapour recovery circuit 2. In particular, a pipe 20 of vapour recovery circuit 2, e.g. coming from a fuel dispensing nozzle, arrives at flow sensor 6. Said flow sensor 6 is electronically connected to electronic control circuit 5, which, based on the data generated by flow sensor 6, can control said brushless motor 4 in such a way as to increase the efficiency thereof.

The same electronic control circuit 5 comprises sensors 52 capable of detecting the electromotive force induced on said single cable 40 that supplies power to brushless motor 4, thus being able to control said brushless motor 4 in such a way as to cause said pumping device 32 to rotate at the appropriate speed to obtain the desired flow rate.

Referring back to vapour recovery circuit 2, at the outlet of flow sensor 6 pipe 20 arrives at inlet 32A of pumping device 32, which then causes the vapours to flow out through said outlet 32B towards a storage tank (not shown). Upstream of the storage tanks, a non-return valve 21 is arranged along pipes 20 of vapour recovery circuit 2.

In this figure one can also see external enclosure 30 of vapour recovery unit 3, in the rear part of which brushless motor 4 is arranged.

Figure 4 shows a third possible embodiment of vapour recovery unit 3 according to the present invention. This embodiment is an evolution of the first embodiment of vapour recovery unit 3, shown by way of example in Figure 2. In this case as well, only said single cable 40 for supplying power to said vapour recovery unit 3 comes from the outside. In the embodiment of Figure 4, vapour recovery unit 3 comprises a pressure transducer 7.

Figure 4 also shows the connection between vapour recovery unit 3 and vapour recovery circuit 2. In particular, a pipe 20 of vapour recovery circuit 2, e.g. coming from a fuel dispensing nozzle, arrives at inlet 32A of pumping device 32. Such pumping device 32 then causes the vapours to flow out through said outlet 32B towards a storage tank, not shown. Upstream of the storage tanks, a non-return valve 21 is arranged along pipes 20 of vapour recovery circuit 2.

Said pressure transducer 7 is connected downstream of said non-return valve 21 to determine the pressure within a storage tank.

Said pressure transducer 7 is electrically connected to the electronic control circuit 5, which, based on the data generated by pressure transducer 7, can appropriately control said brushless motor 4 in such a way as to increase the efficiency thereof.

The same electronic control circuit 5 comprises sensors 52 capable of detecting the electromotive force induced on said single cable 40 that supplies power to the brushless motor 4, thus being able to control said brushless motor 4 in such a way as to cause said pumping device 32 to rotate at the appropriate speed to obtain the desired flow rate.

In this figure one can also see external enclosure 30 of vapour recovery unit 3, in the rear part of which brushless motor 4 is arranged.

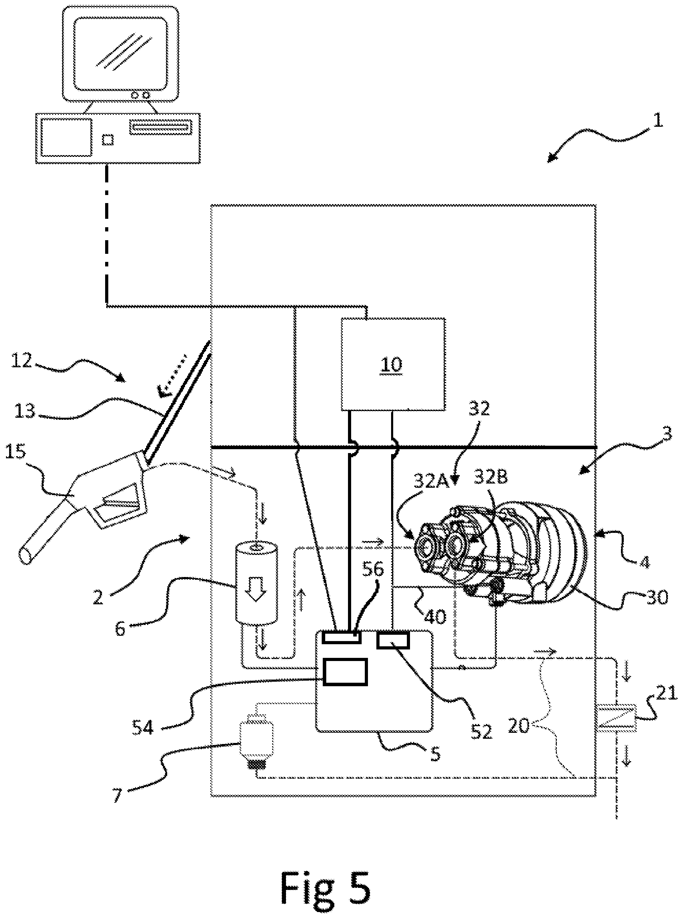

Figure 5 shows a fourth possible embodiment of vapour recovery unit 3 according to the present invention. This embodiment combines the second embodiment and the third embodiment, since vapour recovery unit 3 comprises both a flow sensor 6 and a pressure transducer 7. Both said flow sensor 6 and said pressure transducer 7 are electronically connected to electronic control circuit 5, which, based on the data generated by both flow sensor 6 and pressure transducer 7, can control said brushless motor 4 in such a way as to increase the efficiency thereof.

Vapour recovery unit 3 according to the present invention is particularly suited for being included in fuel filling stations 1.

More in general, a fuel filling station 1 according to the present invention comprises a fuel distribution circuit 12 adapted for controlled distribution of fuel into a tank of a vehicle. In particular, the fuel contained in one or more reservoirs is delivered by a pump to a fuel dispensing nozzle 15, flowing through one or more pipes 13 in which a flow meter, e.g. an encoder-type flow meter, is arranged to determine the dispensed fuel volume.

Fuel filling station 1 according to the present invention comprises a vapour recovery circuit 2 adapted to suck up an amount, in particular a volume, of vapour from the tank of a vehicle which equals the volume of the fuel delivered during a filling phase. Said vapour recovery circuit 2 is also adapted to appropriately store said sucked up vapour into storage tanks.

Said vapour recovery circuit 2 comprises a vapour recovery unit 3 according to the present invention.

Preferably, said vapour recovery circuit 2 is designed in a manner such that an amount of vapour, in particular a volume of vapour, is sucked up from the tank of a vehicle which equals the volume of fuel delivered into the same tank during the filling operation.

In a preferred, but merely illustrative and non-limiting, embodiment, said vapour recovery circuit 2 comprises sensors adapted to measure the volume and the temperature of the recovered and stored vapour.

In one possible, but merely illustrative and non-limiting, embodiment, said vapour recovery circuit 2 comprises a power supply unit, a status LED, preferably a dual-tone one, adapted to provide visual feedback to allow monitoring the operation of the circuit and, if necessary, to signal a trouble in said vapour recovery circuit 2. In one possible, but merely illustrative and non-limiting, embodiment, said vapour recovery circuit 2 comprises a filter adapted to filter the sucked up vapours.

In one possible embodiment of the fuel filling station 1 according to the present invention, it comprises a control unit 10 adapted to control both said fuel distribution circuit 12 and said vapour recovery circuit 2.

Said control unit 10 is, for example, adapted to turn off and/or stop said vapour recovery unit 3 in the event that an error or a fault occurs in said vapour recovery unit 3 or in the vapour recovery circuit 2.

Said control unit 10 is preferably adapted to send the activation signal to vapour recovery unit 3, e.g. via said single cable 40.

Said control unit is adapted to be connected to an external PC, for appropriately programming said control unit of the fuel filling station 1 and/or downloading information about the fuel filling station 1.

Figure 5 shows a fuel filling station 1 that includes a fuel distribution circuit 12 and a vapour recovery circuit 2.

Vapour recovery circuit 2 comprises a vapour recovery unit 3. This embodiment of vapour recovery unit 3 is a preferred one. This embodiment is the fourth embodiment previously described herein.

Figure 5 shows that the fuel distribution circuit 12 comprises a pipe ending with fuel dispensing nozzle 15, through which vehicles' tanks can be filled with fuel. From such fuel dispensing nozzle 15 vapour recovery circuit 2 starts, through which the vapours contained in the vehicles' tanks are sucked up.

The figure shows, by means of arrows, how the fuel flows through pipe 13 towards fuel dispensing nozzle 15, while the vapours are sucked up by means of the same fuel dispensing nozzle 15 and directed towards a storage tank (not shown).

In addition to the previously described features of vapour recovery unit 3, Figure 5 also shows that control unit 10 of the fuel filling station 1 is advantageously connected to electronic control circuit 5 through said connection port 56. Through a connection port 56, which may be either the same to which said control unit 10 of fuel filling station 1 is connected or another one, electronic control circuit 5 can advantageously be connected to an external PC, by means of which said vapour recovery unit 3 can be programmed and/or the working data of said vapour recovery unit 3 can be downloaded.

In the embodiment shown in Figure 5, as aforementioned, flow sensor 6 is directly connected to electronic control circuit 5 of vapour recovery unit 3. Such a combination of features permit the automatic adjustment of the revolution speed of pumping device 32 within a predefined range, so as to optimize the efficiency of the vapour recovery unit 3 and hence that of vapour recovery circuit 2.

In the embodiment shown in Figure 5, as aforementioned, pressure transducer 7 is directly connected to electronic control circuit 5 of vapour recovery unit 3.

More in general, vapour recovery unit 3 according to the present invention, in all embodiments thereof illustrated and described herein, makes it possible to simplify the construction and installation of the vapour recovery unit itself.

Of course, without prejudice to the principle of the invention, the forms of embodiment and the implementation details may be extensively varied from those described and illustrated herein by way of non-limiting example, without however departing from the scope of the invention as set out in the appended claims.

| REFERENCE NUMERALS | | /EB |
|---|---|---|
| Fuel filling stations | 1 | |
| Control unit | 10 | |
| Fuel distribution circuit | | 12 |
| Pipe | | 13 |
| Fuel dispensing nozzle | | 15 |
| Vapour recovery circuit | | 2 |
| Pipes | | 20 |
| Non-return valve | | 21 |
| Vapour recovery unit | | 3 |
| External enclosure | | 30 |
| Pumping device | | 32 |
| Inlet | | 32A |
| Outlet | | 32B |
| Brushless motor | | 4 |
| Cable | | 40 |
| Wires | | 40A, 40B, 40C |
| Stator | | 42 |
| Windings | | 421 |
| Rotor | | 44 |
| Electronic control circuit | | 5 |
| Sensors | | 52 |
| Computing unit | | 54 |
| Connection port | | 56 |
| Flow sensor | | 6 |
| Pressure transducer | | 7 |

**Claims**

1.  Vapour recovery unit (3) for fuel filling stations (1), comprising:

    - at least one pumping device (32) adapted to generate a vapour flow between an inlet (32A) and an outlet (32B) at a variable flow rate as required;
    - a variable-speed brushless motor (4) adapted to rotatably drive said pumping device (32), comprising a stator (42) and a rotor (44);
    - an electronic control circuit (5) adapted to control said brushless motor (4) for rotating said pumping device (32) at a suitable speed in order to obtain the desired vapour flow rate;

    said vapour recovery unit (3) being **characterized in that**:

    - a single electric cable (40) is comprised, which is connected to said vapour recovery unit (3), wherein said single cable (40) has three wires or conductors (40A, 40B, 40C) at most and is adapted to supply power to the brushless motor (4);
    - said electronic control circuit (5) being connected to said single cable (40);

- said electronic control circuit (5) comprising:

- sensors (52) adapted to detect the electromotive force induced on said single cable (40);
- at least one computing unit (54) adapted to determine and monitor the position of the rotor (44) relative to the stator (42) as a function of the data generated by said sensors (52); and **in that**

- no sensors are housed in the pumping device (32) and/or in the brushless motor (4) for determining the position of the rotor (44) relative to the stator (42) of the brushless motor (4).

2. Unit according to claim 1, wherein said pumping device (32) is a rotary-roller volumetric pump.

3. Unit according to claim 2, wherein said pumping device (32) is adapted to generate a variable flow rate of 5 l/min to 50 l/min.

4. Unit according to one of the preceding claims, wherein said brushless motor (4) is adapted to rotate at a variable speed of 150 rpm to 1,500 rpm.

5. Unit according to one of the preceding claims, wherein said electronic control circuit (5) is at least partly housed inside an external enclosure (30), wherein said external enclosure (30) is adapted to internally house both said pumping device (32) and said brushless motor (4).

6. Unit according to one of the preceding claims, wherein said electronic control circuit (5) is electronically connected to a flow sensor (6) adapted to measure the vapour flow entering the pumping device (32);
the data generated by said flow sensor (6) are used by said electronic control circuit (5) for controlling said brushless motor (4) during the rotation of said pumping device (32).

7. Unit according to claim 1 or 5, wherein said electronic control circuit (5) is electronically connected to a pressure transducer (7) adapted to determine the pressure inside a vapour storage tank;
the data generated by said pressure transducer (7) are used by said electronic control circuit (5) for at least controlling said brushless motor (4) during the rotation of said pumping device (32).

8. Unit according to one of the preceding claims, wherein said electronic control circuit (5) comprises a connection port (56) through which said electronic control circuit (5) can be connected to an external control unit (10, PC).

9. Fuel filling station (1) comprising:

- a fuel distribution circuit (12) adapted for controlled distribution of fuel into a tank of a vehicle;
- a vapour recovery circuit (2) adapted to suck up an amount of vapours from the tank of a vehicle which equals the volume of the fuel delivered during the filling phase, and to suitably store said sucked up vapour;

said fuel filling station (1) being **characterized in that** said vapour recovery circuit (2) comprises a vapour recovery unit (3) according to claim 1.

10. Fuel filling station (1) according to claim 9, comprising a control unit (10) adapted to control both said fuel distribution circuit (12) and said vapour recovery circuit (2).

**Patentansprüche**

1. Dampfrückgewinnungseinheit (3) für Kraftstofftankstellen (1), aufweisend:

- mindestens eine Pumpvorrichtung (32), die eingerichtet ist, einen Dampfstrom zwischen einem Einlass (32A) und einem Auslass (32B) mit einer variablen Durchflussmenge nach Bedarf zu erzeugen;
- einen drehzahlvariablen bürstenlosen Motor (4), der eingerichtet ist, die Pumpvorrichtung (32) drehend anzutreiben und der einen Stator (42) und einen Rotor (44) aufweist;
- einen elektronischen Steuerschaltkreis (5), der eingerichtet ist, den bürstenlosen Motor (4) zu steuern, um die Pumpvorrichtung (32) mit einer geeigneten Geschwindigkeit zu drehen, um die gewünschte Dampfdurchflussrate zu erhalten;

wobei die Dampfrückgewinnungseinheit (3) **dadurch gekennzeichnet ist, dass**:

- ein einziges elektrisches Kabel (40) vorhanden ist, das mit der Dampfrückgewinnungseinheit (3) verbunden ist, wobei das einzige Kabel (40) höchstens drei Drähte oder Leiter (40A, 40B, 40C) aufweist und eingerichtet ist, den bürstenlosen Motor (4) mit Strom zu versorgen;
- wobei die elektronische Steuerschaltung (5) mit dem einzigen Kabel (40) verbunden ist;
- wobei der elektronische Steuerkreis (5) aufweist:

- Sensoren (52), die eingerichtet sind, die auf das einzige Kabel (40) induzierte elektromotorische Kraft zu erfassen;
- mindestens eine Recheneinheit (54), die eingerichtet ist, die Position des Rotors (44) in Bezug auf den Stator (42) in Abhängigkeit von den durch die Sensoren (52) erzeugten Daten zu bestimmen und zu überwachen; und dadurch, dass

- keine Sensoren in der Pumpvorrichtung (32) und/oder im bürstenlosen Motor (4) untergebracht sind, um die Position des Rotors (44) in Bezug auf den Stator (42) des bürstenlosen Motors (4) zu bestimmen.

2. Einheit nach Anspruch 1, wobei die Pumpvorrichtung (32) eine volumetrische Pumpe mit Rotationswalze ist.

3. Einheit nach Anspruch 2, wobei die Pumpvorrichtung (32) eingerichtet ist, eine variable Durchflussmenge von 5 l/min bis 50 l/min zu erzeugen.

4. Einheit nach einem der vorhergehenden Ansprüche, wobei der bürstenlose Motor (4) eingerichtet ist, mit einer variablen Geschwindigkeit von 150 U/min bis 1.500 U/min zu rotieren.

5. Einheit nach einem der vorhergehenden Ansprüche, wobei die elektronische Steuerschaltung (5) zumindest teilweise in einem externen Gehäuse (30) untergebracht ist, wobei das externe Gehäuse (30) eingerichtet ist, sowohl die Pumpvorrichtung (32) als auch den bürstenlosen Motor (4) aufzunehmen.

6. Einheit nach einem der vorhergehenden Ansprüche, wobei die elektronische Steuerschaltung (5) elektronisch mit einem Durchflusssensor (6) verbunden ist, der eingerichtet ist, den in die Pumpvorrichtung (32) eintretenden Dampfstrom zu messen; wobei die von dem Strömungssensor (6) erzeugten Daten von der elektronischen Steuerschaltung (5) zur Steuerung des bürstenlosen Motors (4) während der Drehung der Pumpvorrichtung (32) verwendet werden.

7. Einheit nach Anspruch 1 oder 5, wobei die elektronische Steuerschaltung (5) elektronisch mit einem Druckwandler (7) verbunden ist, der eingerichtet ist, den Druck innerhalb eines Dampfspeichers zu bestimmen; wobei die von dem Druckwandler (7) erzeugten Daten von der elektronischen Steuerschaltung (5) zumindest zur Steuerung des bürstenlosen Motors (4) während der Drehung der Pumpvorrichtung (32) verwendet werden.

8. Einheit nach einem der vorhergehenden Ansprüche, wobei die elektronische Steuerschaltung (5) einen Anschluss (56) aufweist, über den die elektronische Steuerschaltung (5) mit einer externen Steuereinheit (10, PC) verbunden werden kann.

9. Kraftstofftankstelle (1) aufweisend:

- einen Kraftstoffverteilungskreislauf (12), der für die kontrollierte Verteilung von Kraftstoff in einen Fahrzeugtank eingerichtet ist;
- einen Dampfrückgewinnungskreislauf (2), der eingerichtet ist, eine Menge an Dämpfen aus dem Tank eines Fahrzeugs abzusaugen, die dem Volumen des während der Betankungsphase abgegebenen Kraftstoffs entspricht, und den abgesaugten Dampf in geeigneter Weise zu speichern;

wobei die Kraftstofftankstelle (1) **dadurch gekennzeichnet ist, dass** der Dampfrückgewinnungskreislauf (2) eine Dampfrückgewinnungseinheit (3) nach Anspruch 1 aufweist.

10. Kraftstofftankstelle (1) nach Anspruch 9, mit einer Steuereinheit (10), die eingerichtet ist, sowohl den Kraftstoffverteilungskreislauf (12) als auch den Dampfrückgewinnungskreislauf (2) zu steuern.

**Revendications**

1. Unité de récupération de vapeur (3) pour stations de remplissage de carburant (1), comprenant :

   - au moins un dispositif de pompage (32) adapté pour générer un flux de vapeur entre une entrée (32A) et une sortie (32B) à un débit variable selon les besoins ;
   - un moteur sans balai à vitesse variable (4) adapté pour entraîner en rotation ledit dispositif de pompage (32), comprenant un stator (42) et un rotor (44) ;
   - un circuit de commande électronique (5) adapté pour commander ledit moteur sans balais (4) pour faire tourner ledit dispositif de pompage (32) à une vitesse appropriée afin d'obtenir le débit de vapeur souhaité ;

   ladite unité de récupération de vapeur (3) étant **caractérisée en ce que** :

   - un seul câble électrique (40) est compris, qui est connecté à ladite unité de récupération de vapeur (3), dans lequel ledit câble unique (40) a trois fils ou conducteurs (40A, 40B, 40C) au maximum et est adapté pour alimenter le moteur sans balai (4) ;
   - ledit circuit électronique de commande (5) étant connecté audit câble unique (40) ;
   - ledit circuit de commande électronique (5) comprenant :

      - des capteurs (52) adaptés pour détecter la force électromotrice induite sur ledit câble unique (40) ;
      - au moins une unité de calcul (54) adaptée pour déterminer et surveiller la position du rotor (44) par rapport au stator (42) en fonction des données générées par lesdits capteurs (52) ; et **en ce que**

   - aucun capteur n'est logé dans le dispositif de pompage (32) et/ou dans le moteur sans balais (4) pour déterminer la position du rotor (44) par rapport au stator (42) du moteur sans balais (4).

2. Unité selon la revendication 1, dans laquelle ledit dispositif de pompage (32) est une pompe volumétrique à rouleaux rotatifs.

3. Unité selon la revendication 2, dans laquelle ledit dispositif de pompage (32) est adapté pour générer un débit variable de 5 l/min à 50 l/min.

4. Unité selon l'une quelconque des revendications précédentes, dans laquelle ledit moteur sans balai (4) est adapté pour tourner à une vitesse variable de 150 tr/min à 1 500 tr/min.

5. Unité selon l'une quelconque des revendications précédentes, dans laquelle ledit circuit de commande électronique (5) est au moins partiellement logé à l'intérieur d'une enceinte externe (30), dans laquelle ladite enceinte externe (30) est adaptée pour loger à l'intérieur à la fois ledit dispositif de pompage (32) et ledit moteur sans balai (4).

6. Unité selon l'une quelconque des revendications précédentes, dans laquelle ledit circuit de commande électronique (5) est connecté électroniquement à un capteur de débit (6) adapté pour mesurer le débit de vapeur entrant dans le dispositif de pompage (32) ;
   les données générées par ledit capteur de débit (6) sont utilisées par ledit circuit de commande électronique (5) pour commander ledit moteur sans balais (4) pendant la rotation dudit dispositif de pompage (32).

7. Unité selon la revendication 1 ou 5, dans laquelle ledit circuit de commande électronique (5) est connecté électroniquement à un transducteur de pression (7) adapté pour déterminer la pression à l'intérieur d'un réservoir de stockage de vapeur ;
   les données générées par ledit transducteur de pression (7) sont utilisées par ledit circuit de commande électronique (5) pour au moins commander ledit moteur sans balais (4) pendant la rotation dudit dispositif de pompage (32).

8. Unité selon l'une quelconque des revendications précédentes, dans laquelle ledit circuit de commande électronique (5) comprend un port de connexion (56) à travers lequel ledit circuit de commande électronique (5) peut être connecté à une unité de commande externe (10, PC).

9. Poste de remplissage de carburant (1) comprenant :

   - un circuit de distribution de carburant (12) adapté pour la distribution contrôlée de carburant dans un réservoir d'un véhicule ;

- un circuit de récupération des vapeurs (2) adapté pour aspirer une quantité de vapeurs du réservoir d'un véhicule égale au volume du carburant délivré pendant la phase de remplissage, et pour stocker de manière appropriée lesdites vapeurs aspirées ;

ladite station de remplissage de carburant (1) étant **caractérisée en ce que** ledit circuit de récupération de vapeur (2) comprend une unité de récupération de vapeur (3) selon la revendication 1.

10. Station de remplissage de carburant (1) selon la revendication 9, comprenant une unité de commande (10) adaptée pour commander à la fois ledit circuit de distribution de carburant (12) et ledit circuit de récupération de vapeur (2).

Fig 1

Fig 2

Fig 3

Fig 4

EP 4 374 076 B1

Fig 5

## REFERENCES CITED IN THE DESCRIPTION

**Patent documents cited in the description**

- US 5027654 A
- WO 9732130 A1
- US 2019257262 A1
- WO 2015187976 A2